# EUROPEAN PATENT APPLICATION

(11) **EP 1 150 228 A1**
(43) Date of publication of application: **31.10.2001**
(21) Application number: 00650045.8
(22) Date of filing: 28.04.2000
(51) Int. Cl.: G06F 17/60

(54) **A method of distributing redeemeable vouchers to targeted customers**

(71) Applicant: Fournir Limited, Dublin 3 (IE)
(72) Inventor: Coghlan, Paul, Dublin 4 (IE)
(74) Representative: O'Connor, Donal Henry

(57) **Abstract**

A method for a distributor to allocate coupons or tickets used often in marketing of goods or services such as for example a discount off certain purchases. The ticket is downloaded to targeted customers' mobile phones, PDAs or other wireless devices. Each customer uses the mobile phone to present the ticket for redemption.

## Description

### Introduction

The present invention relates to a method and apparatus for allocating coupons or tickets which are redeemable, which tickets have a value when used under specified trading conditions.

Such coupons or tickets are used extensively in marketing, for example, when a particular store opens a new branch, then an effort is made to target customers. For example, it could be by way of offering a coupon with a reduction off any purchase made within a specified time at the new store, it could be an invitation to the opening of the store or indeed it could be any other similar offer. The problem for this type of marketing is that the only way is a blanket approach, except in the case of the person doing the marketing, hereinafter referred to generally as the distributor, happens to have a very highly organised and targeted database of customers. Even then, it can be difficult to accurately target those customers that you wish to send an invitation or coupon to. Again, the sending of such coupons is extremely expensive when mail shots are used and much of the mailing is to people whom it is not desired to target.

One way of presenting such coupons or tickets to consumers is by way of coupons which can be detached from publications such as newspapers, magazines and the like but again, this is not particularly efficient. Firstly, having to have the coupon printed and placed in a large number of magazines or newspapers is costly and secondly, unfortunately, a large number of people who have no intention whatsoever of ever buying the product or using the service again, will decide that the offer is sufficiently good to cause them to travel to the location to avail of the free service or the offer. They will never again travel to the location. This can be readily easily instanced by, for example, the opening of a service such as a hairdressing salon where a lot of people might travel some considerable distances to avail of a half price service such as a haircut or shampoo and set who would not and have no intention of ever again attending the establishment. A further problem with such coupons and offers is that it is impossible to phase them over time. In other words, while one wishes to attract a large number of customers to one's establishment, one does not necessarily wish them all to arrive at the same time. It is, however, impossible, except by way of mail, to deliver a coupon or ticket to people and then to ensure that the coupons or tickets are only redeemed over a period of time. While it is possible with such coupons to make the value of the ticket variable in the sense that it is possible to give greater discounts the more goods or services that are purchased, there are problems in that one does not want a large number of people looking for a particular service or goods at the same time. One would like to phase it out over a relatively large period of time.

A related problem is, having sent out a large number of tickets or coupons, for example, by post, to a selected targeted group of customers, one does not have any record of who used the coupons or who did not, unless the coupons have to be posted back. This is particularly the case, for example, with offers like "buy two meals, get a third one free" and so on. People do not wish to fill out forms.

For example, where the coupon is effectively an invitation to a particular event, one of the problems that the organisers have is that they need to keep some record of who is likely to come to the event and secondly, they need to have some way of catering for the numbers. This usually means that since people cannot be sure as to the number of people that will accept their invitation, they are forced to restrict the initial invitation to a smaller group of people than they would necessarily wish to restrict it to and thus, very often, these events can be under attended, while if the organisers had known, prior to the event, that a large number of people that they invited would not be attending, then they could have sent out further invitations. Unfortunately, the time required to post out invitations and wait for the return of acceptances is such as to make this effectively impractical.

While the growth of the Internet has led to a considerable increase in e commerce and if one likes e business generally, concentration has heretofore been on the managing of business information processes, including the dissemination of timely information, order processing and customer support. A factor which is readily understood by those engaged in e commerce, is that until the introduction of the Internet, traditional advertising means of print, radio, television, etc. was such that only limited approaches could be made. The same, as is mentioned above, applies to marketing promotions such as invitations to showings, to openings, and the presentation of coupons and tickets generally, having a monetary value when used at a particular establishment or to obtain particular goods and services.

Ideally, if one could reach, with such coupons or tickets, target customers in a controlled way, then this would be extremely advantageous. At the same time, using the Internet to target such customers with coupons, tickets or the like, would have exactly the same problems as are with more conventional methods of presentation of such coupons or tickets.

It is known, for example, in European Patent Specification No. 980052 to have a method and apparatus for securely circulating electronic tickets composed of digital information which need to be protected from duplicate redemption or fraud. However, for example, in this European patent specification, the emphasis has been on security of transmission across the Internet. However, these do not address the problems of targeted marketing which would overcome the problems. For example, over the Internet, it would not be possible, except with a very elaborate marketing system, to provide individual unique tickets to targeted customers. It would be extremely complex and time consuming to do. Further, the redemption of the tickets is difficult.

Heretofore, as mentioned above, too much attention has been paid to security and too little to the actual method of distribution which would be such as to, not alone be efficient and allow targeted marketing to take place, but which would also, and more importantly, ensure that the customer was able to utilise the ticket without an elaborate system. Systems, such as described in European Patent Specification No. 980052, while extremely efficient, do require a whole system for ticket issue, transfer and redeeming requires specific and dedicated equipment. What is required is something that, while reasonably secure, is user friendly and controllable.

### Statements of Invention

According to the invention there is provided a method for a distributor to allocate redeemable tickets having value when used under specified trading conditions to a group of targeted customers comprising the initial steps of:-
identifying those targeted customers forming part of a targeted group of customers having wireless devices with a display screen serviced by a telecommunications provider;
allocating a ticket having a unique ticket identifier to each customer;
storing the unique ticket identifiers in a distributor database;
transmitting the ticket to the wireless device of the customer; and subsequently on the customer presenting the ticket for redemption the steps are carried out of:-
reading the unique ticket identifier;
consulting the distributor database to ascertain whether the ticket has been previously redeemed and, when not, redeeming the ticket; and
on redemption of the ticket, noting the redemption in the database.

The great advantage of this is that the tickets can be downloaded to the targeted customers at minimal cost. There is no printing and effectively the distribution costs are minimal. Further the tickets will not generally fall into the hands of anybody other than the targeted customer or somebody associated with him or her.

In one method according to the invention the customer supplies the ticket for redemption by displaying at least the unique ticket identifier on the wireless device display screen. Again this is a relatively simple way of showing the ticket. The customer doesn't have to do anything, nor does the recipient but simply read it off the mobile phone, or other wireless device such as a PDA. Obviously there is no difference between the way in which a PDA or a mobile phone would operate for carrying out the present invention.

In one embodiment the unique ticket identifier includes a distributor phone number and the customer presents the ticket for redemption by:-
retrieving the distributor phone number;
opening a communications link with the distributor; and
downloading the unique ticket identifier to the distributor for redemption.

Obviously, while we are talking about telephone numbers in the sense that we are using a telephone, it will be equally appreciated that all that is required is some locator number such as a URL so that telephone number is to be used in the broadest sense. The great advantage of this is that this could all be done centrally so that once the ticket had been presented, it would be automatically cancelled, or could be used by the distributor to record that it had been redeemed and what ever further action the distributor wished to do could then be carried out.

Thus, for example, on redemption of the ticket, a replacement ticket is downloaded to the mobile phone. This latter replacement ticket could have a value different to that it replaced such as one determined by the actual trading conditions on redemption. This gives maximum flexibility to the distributor. For example, after a validity term of time has elapsed, the ticket is altered by downloading to the wireless device an alteration command. This validity term can be predetermined on issuing the ticket, by the pattern of redemption of other redeemable tickets allocated to other customers of the same group of targeted customers and so on. For example, the alteration command could be a deletion command, or could change the specified trading conditions, or could change the value of the ticket and so on. Again it allows absolute flexibility to the distributor.

In a still further embodiment of the invention the customers are targeted from a customer database held by the telecommunications provider. This leads to added revenue for the telecommunications provider as well as allowing the distributor use the telecommunications provider to adequately target people in particular areas, or people for whom the telecommunications provider has specific information such as, for example, purchases and so on. Alternatively, obviously the customers could be targeted from a customer database held by the distributor, or indeed by the merchant carrying out the trade when the distributor and merchant are different entities.

It is also envisaged that the specified trading conditions may be varied for different groups of customers within the group of targeted customers. Again one could well imagine that you wanted to target, for example, with one offer parents with children and the same offer would be targeted differently to an adult allegedly living on his or her own, or indeed a childless couple.

As explained the specified trading conditions can be chosen for some or all of the following criteria:-
value of relevant trade;
geographic location where trade takes place;
time and date of trade;
time elapsed since last, if any, trade;
date of issue of ticket; and
customer demographics.

It will be appreciated that in one method in accordance with the invention:
after a period of time from when the tickets were first allocated to each customer, the remaining unredeemed tickets are cancelled;
the targeted customers who redeemed the tickets are collected to form a separate customer group; and
the targeted customers who did not redeem the tickets are collected to form another customer group.

This again allows the distributor obtain information on the particular offer, how it was taken up and possibly analyse whether the offer was appropriate or not.

In another embodiment of the invention, the ticket is in the form of an option on an invitation to an event and in which the unique ticket identifier includes a distributor phone number and the customer is required, before some specified time to:-
retrieve the distributor phone number;
open a communications link with the distributor;
download the unique ticket identifier; and
then, the invitation, having a new unique identifier number, is downloaded to the mobile phone.

The great advantage of this is that will allow people who are planning events to be able to ensure as far as they can that the event will be well attended.

### Detailed Description of the Invention

The invention will be more clearly understood by the following description of some embodiments thereof, given by way of example only, with reference to the accompanying drawings, in which:-
Fig. 1 is a schematic view of a communications network utilising the invention,
Figs. 2 and 3 are flowcharts illustrating the method,
Fig. 4 is a flowchart of another method, and
Fig. 5 is a flowchart of an alternative method.

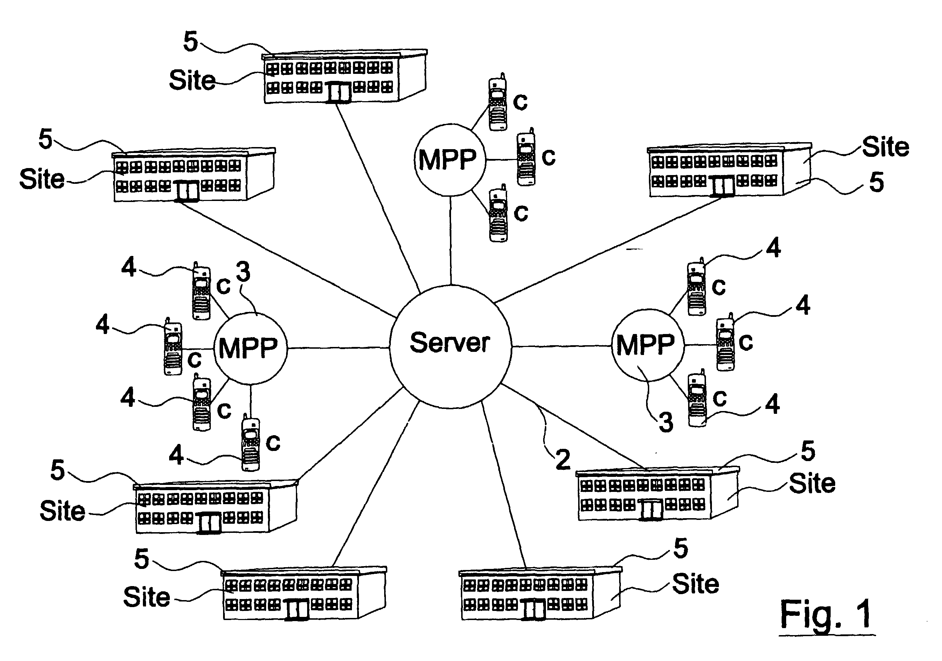

Referring initially to Fig. 1, there is illustrated a server, indicated generally by the reference numeral 1, connected by communication links 2 to a number of mobile phone providers 3 who in turn service mobile phones 4. A number of merchant sites providing resources are identified by the reference numeral 5. Essentially, the mobile phones are used by customers and they are serviced by the mobile phone provider 3 and the server 1 is operated by a suitable distributor. The server 1 could be on the site of the mobile phone provider or could be on the site of a merchant or retail service provider or, as will often be the case, a separate site, however, for ease in the specification, it is shown as a separate unit. Essentially, the system is arranged to allow the customers receive tickets on their mobile phone, which tickets they can then present at the merchant sites 5 for redemption.

When, for example, a merchant wishes to provide certain targeted customers with a redeemable coupon or ticket, the distributor operating the server 1 consults a database of groups of targeted customers. The database may be held by the distributor and provided by the distributor, it may be held and provided by the mobile phone operator 3 or indeed it may be a database held by the merchants 5 or another third party. However, irrespective of which party holds the database which could, in its simplest, be arranged by the distributor as being simply phone numbers of customers within a targeted area, once the database is consulted, a number or group of target customers are produced. Then, the distributor opens communications via the mobile phone provider 3 to the mobile phones 4.

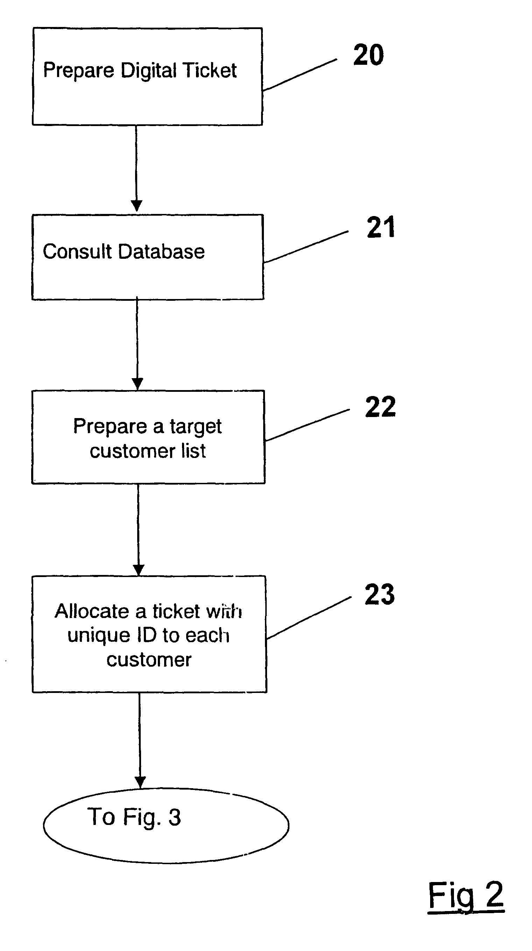

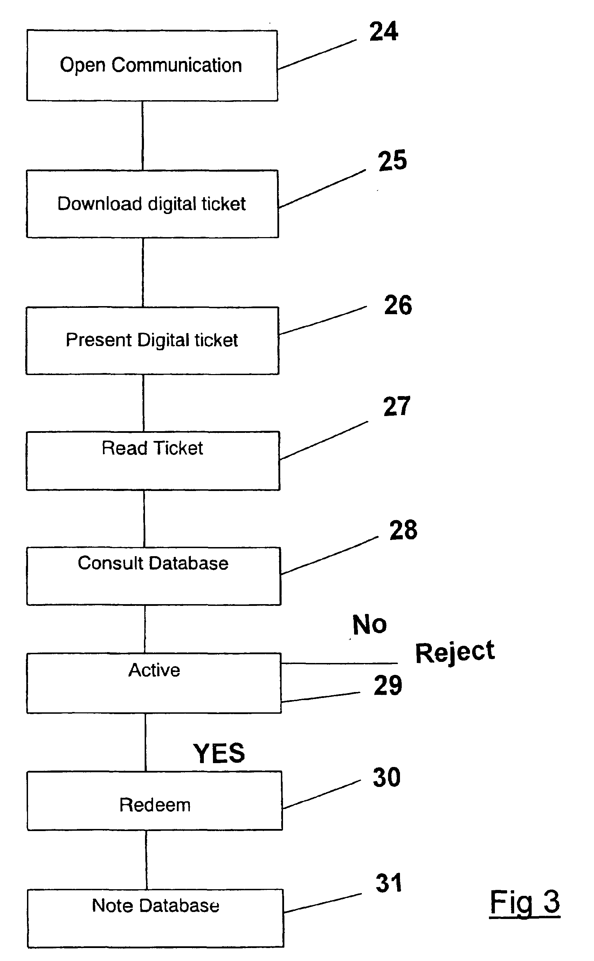

Referring now to Figs. 2 and 3, in step 20, the distributor prepares a digital ticket giving details of the offer and what it entails. The digital ticket has a value when used under specified trading conditions. For example, it could be "one meal free for every two paid for", it could be a discount off the purchase price of a particular service or any other suitable offer. Then, in step 21, the distributor consults the database and in step 22, a target customer list is prepared. Then, in step 23, a ticket containing the offer with a unique I.D. number is allocated to each customer. Then, in step 24, a communications link is opened through the mobile phone provider with each mobile phone 4. In step 25, the digital ticket is downloaded to each mobile phone.

Then, the customer can view the ticket and decide whether he or she wishes to avail of the offer and, presuming the customer then avails of the offer, in step 26, he or she goes to, for example, the retail establishment and presents the mobile phone recalling the ticket so that in step 27, the person serving can read the ticket and in step 28, the person reading the ticket consults the database which was prepared as a target customer list in step 22 and then answers the question in step 29 of whether the ticket is active or not. If it is not, then the presentation is rejected and if it is, then, in step 30, the ticket is redeemed by the merchant. In step 31, the fact that the ticket has been redeemed is noted on the database. The database may be held in separate retail establishments or alternatively the information may be downloaded, either by phone each time to the server 1, or in batches each day. The server will then in turn download a corrected database each day to each location 5.

It is suggested that, in many instances, the relatively simple presentation of the mobile phone will be such to eliminate almost all fraud. While a certain amount of fraud could still exist in that if the database is only updated at regular intervals, a customer could in theory, present the mobile phone more than once to the same establishments and have the ticket redeemed a multiplicity of times. There are some reasons why this will not be that important. Firstly, the offers are usually not of great monetary value and even if they are, the fact that somebody effectively gets two tickets is not a major problem. In any case, the distributor will know immediately who has presented and received more than one ticket. Thus, the necessary steps can be taken either to ensure that that customer gets no more such offers or tickets or alternatively, as is normally advantageous, redress can be obtained. In effect, the security is not a major issue. Obviously, if, each time a ticket is redeemed, if the information is downloaded to the server 1 and the server 1 continually updates all the databases in each merchant establishment 5, the question of fraud would be eliminated. Alternatively, the customer may have to delete the ticket by being asked to enter a cancelling code.

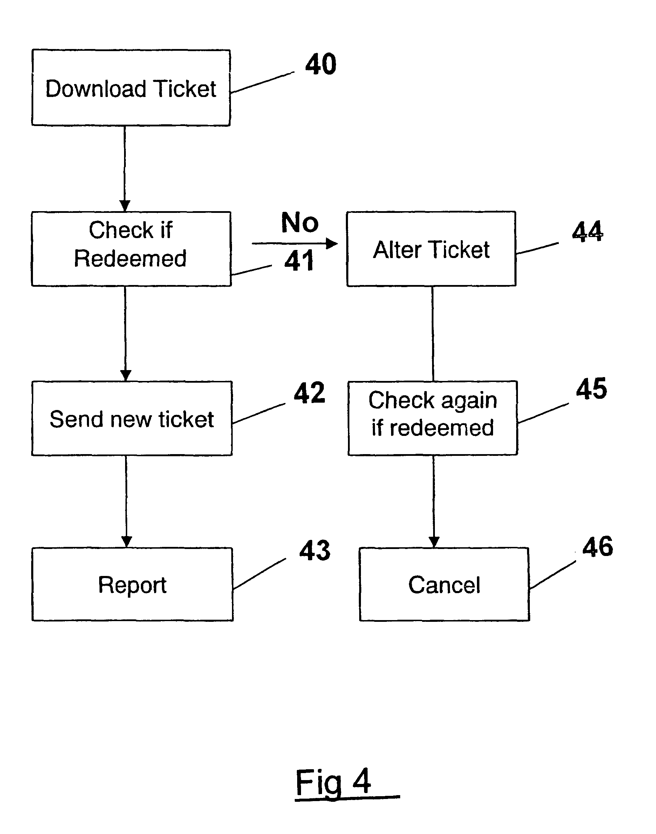

Referring now to Fig. 4, there is illustrated a flowchart of portion of a method similar to that described already with the added steps of, after the ticket is downloaded in step 40, the distributor checks after a period of time in step 41 to find has the ticket been redeemed. If it has, in step 42 the distributor sends a new ticket and this procedure is repeated for as long as the distributor considers it necessary and this is shown in step 43. If, however, having checked it in step 41, the distributor finds that the ticket has not been redeemed then in step 44, the ticket is altered and again the ticket is checked after a period of time in step 45. If the new and altered ticket has not been redeemed, then in step 46 the ticket is cancelled.

In some other instances, it may be desired to send invitations to a show, for example, the opening of a store, a new fashion show and so on and the organisers wish to send out invitations but they also wish to know whether the invitations will be accepted or not. This can be readily easily handled by the present invention.

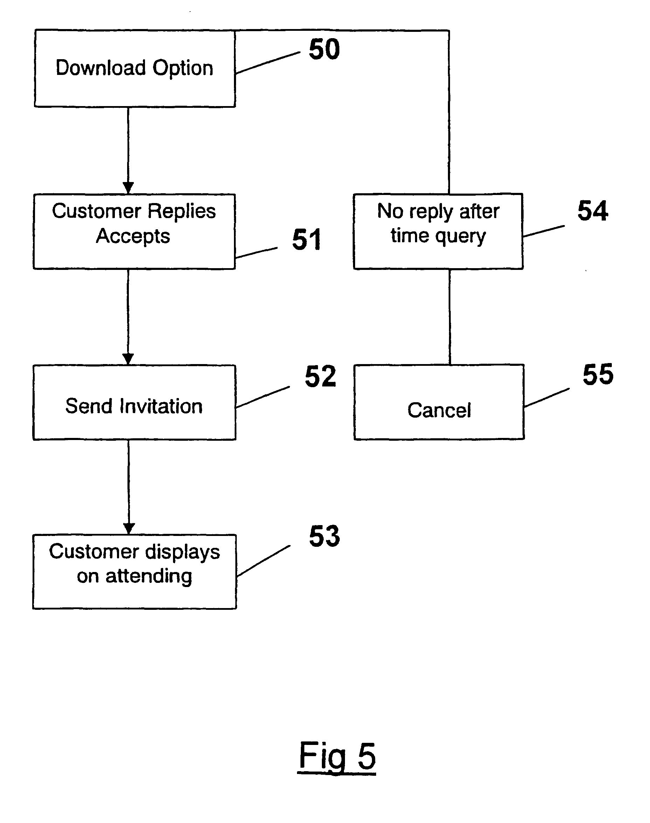

Referring now to Fig. 5, in step 50, there is downloaded a ticket to the consumer or customer which is an option ticket, in other words, it is not an actual invitation to the particular event that will allow you attend but is simply a request asking the person that if they do want an invitation, that they reply. In step 51, when the customer replies and accepts, this is noted. Then in step 52, an invitation sent out to the customer and in step 53, at the event, the customer simply displays the invitation with its unique identifier number, as a ticket at the entrance or at some other time at the particular showing. If, after a certain length of time, no reply has been received, in step 55, the database is searched to see has a reply been received and in step 56 the option is cancelled. Thus, the person who has not replied will not then be able to attend the particular function because the ticket will have effectively been deleted from the mobile phone.

A major advantage of the present invention is the facility for a customer to store a large number of tickets on a mobile phone thus obviating the need to carry a large quantity of physical coupons. Thus, the invention facilitates, not simply the trading establishment, but also the customer.

It is envisaged that the unique ticket identifier will include a distributor phone number and customer will present the ticket for redemption by retrieving the distributor phone number; and then opening a communications link with the distributor such that the unique ticket identifier is downloaded automatically to the distributor either for redemption by the distributor when, for example, it is an order being made to a distributor to send goods or in the sense that it is a trade that is remote or alternatively, it can be used at a specific establishment so that the downloading is carried out at the establishment by the phone call so that the establishment's database and thus the distributors are automatically upgraded.

It is also envisaged that, for example, the establishment could then send a signal to the mobile phone disabling the ticket. In many instances, on redemption of a ticket, a replacement ticket may be downloaded to the mobile phone. For example, it may be a particular offer that the distributor is willing to give more than one of, if, for example, they are taken up within a certain length of time and so on. The distributor may be willing to allow a person use one ticket each week. The variations are endless. For example, the replacement ticket could have a value different to that it replaced or indeed the replacement ticket could have a value determined by the actual trading conditions on redemption. If a person had used a ticket and had redeemed it on buying a considerable amount of goods, then an additional ticket might be provided.
As a further incentive, the additional ticket could have a higher discount or monetary value than the previous ticket. Another advantage in accordance with the present invention, is that it is possible to place a validity term of time on each ticket so that when that time has elapsed, the ticket can be altered by downloading to the mobile phone an alteration command. This alteration command could, for example, be a deletion command and indeed, the command could be of any form. In one embodiment of the invention, the validity term could be predetermined on issuing the ticket. Also, it will be appreciated that it is possible to give slightly different tickets to different people within the one group of targeted customers. Thus, for example, one might give some people an offer for a free meal on a Monday, to others the offer might by on a Tuesday and to others, it might be on a Wednesday. In this way, the establishment could control the number of meals that it was handling each day, which meals had, in some way, some redemption cost in them. Also, it is possible that the validity term might be determined by the pattern of redemption of the other redeemable tickets allocated to other customers of the same group of targeted customers. For example, if an offer was given and it was found that, very quickly, the offer was taken up by a lot of people, then the distributor might make the decision that other people were unlikely to take up the offer and would simply terminate the offer.

Many types of alteration commands may be provided and it is envisaged that the alteration command could change, over time, the specified trading conditions if, having found that the offer was not being taken up or indeed that the offer was too onerous a cost on the distributor. Obviously, the ticket could simply be altered in actual offer terms in that the value of it could be offered.

The customer database could be held by the telecommunications provider, it could can be held by the distributor particularly where the distributor is in fact the merchant or it could be held on a merchant database or alternatively the database could be provided from previous special offers, coupons, tickets and the like that were dispatched. It is envisaged, for example, that after a period of time from when the tickets were first allocated to each customer, the remaining unredeemed tickets could be cancelled and this would provide a list of targeted customers who had not redeemed the tickets as well as a list of targeted customers who had redeemed the tickets and then further marketing decisions could be made. For example, the marketing decision to be made for those who had not redeemed the tickets could be different to that made for those who had used the ticket. They might get further offers. It will also be appreciated that the specified target conditions can be varied for different groups of customers within the group of targeted customers and, as mentioned above, this can allow the offer, for example, to be spread out by way of time or other factors.

It will be appreciated that the specified trading conditions can be flexibly chosen and do not have to be the same for all the customers within the targeted group. For example, the value of the ticket could be based on the value of the relevant trade, whether it be the purchase of goods or services by way of a simple discount, the value of the ticket could be changed for different geographic locations where the trade takes place. Thus, it might be decided that in an effort to increase business within a particular area of the city, the actual offer for that particular area of the city might be greater than another area. In this way, the offer could actually be such as to encourage people to go to establishments that were possibly less popular within a particular chain of establishments than others. Similarly, the value of the relevant ticket could vary both in time and date of trade. Thus, the ticket could be provided such that there would be a modest discount for using the ticket and redeeming it when at a particularly popular trading time, while a greater discount could be given or a more advantageous offer could be made so that an establishment could provide a service or sell goods at a less busy time. Further, the specified trading conditions will often be chosen on the basis of the time that has elapsed since the last time the particular customer made a trade with the establishment.

Additionally, in an effort to persuade people to accept an offer, the value of the ticket could be changed on the basis of the date of issue. In other words, one could have a sliding scale of discounts which would encourage people to take the offer up sooner rather than later. Similarly, it will be appreciated that the offer can be very carefully gauged to the demographics of the particular customers. It is well appreciated that as, for example, mobile phone operators become more sophisticated, they are able to extract more and more information from the pattern of calls of the customers, which pattern of calls allows them to clearly identify the interests and, in many instances, the spending habits of the subscriber.

In all the above reference has been made to mobile phones and it will be appreciated that a mobile phone is only one form of wireless device that could be used. For example, one could use a PDA, a palm-top computer, a notebook computer and indeed any wireless device capable of receiving a signal and transmitting a signal. Preferably, but not essentially, with some form of display incorporated therein. Thus, more generally this invention relates to such wireless devices that are now known or may be produced in the future. However, the mobile phone is in the most common use today and therefore the above description has related to mobile phone rather than to for example PDAs.

In the specification the terms "comprise, comprises, comprised and comprising" or any variation thereof and the terms "include, includes, included and including" or any variation thereof are considered to be totally interchangeable and they should all be afforded the widest possible interpretation.

The invention is not limited to the embodiments hereinbefore described but may be varied in both construction and detail.

## Claims

1. A method for a distributor to allocate redeemable tickets having value when used under specified trading conditions to a group of targeted customers comprising the initial steps of:-
identifying those targeted customers forming part of a targeted group of customers having wireless devices with a display screen serviced by a telecommunications provider;
allocating a ticket having a unique ticket identifier to each customer;
storing the unique ticket identifiers in a distributor database;
transmitting the ticket to the wireless device of the customer; and subsequently on the customer presenting the ticket for redemption the steps are carried out of:-
reading the unique ticket identifier;
consulting the distributor database to ascertain whether the ticket has been previously redeemed and, when not, redeeming the ticket; and
on redemption of the ticket, noting the redemption in the database.

2. A method as claimed in claim 1, in which the customer supplies the ticket for redemption by displaying at least the unique ticket identifier on the wireless device display screen.

3. A method as claimed in claim 1 or 2, in which the unique ticket identifier includes a distributor phone number and the customer presents the ticket for redemption by:-
retrieving the distributor phone number;
opening a communications link with the distributor; and
downloading the unique ticket identifier to the distributor for redemption.

4. A method as claimed in any preceding claim, in which, on redemption of the ticket, a replacement ticket is downloaded to the mobile phone.

5. A method as claimed in claim 4, in which the replacement ticket has a value different to that it replaced.

6. A method as claimed in claim 4 or 5, in which the replacement ticket has a value determined by the actual trading conditions on redemption.

7. A method as claimed in any preceding claim, in which, after a validity term of time has elapsed, the ticket is altered by downloading to the wireless device an alteration command.

8. A method as claimed in claim 7, in which the validity term is predetermined on issuing the ticket.

9. A method as claimed in claim 7 or 8, in which the validity term is determined by the pattern of redemption of the other redeemable tickets allocated to other customers of the same group of targeted customers.

10. A method as claimed in any of claims 7 to 9, in which the alteration command is a deletion command.

11. A method as claimed in any of claims 7 to 9, in which the alteration command changes the specified trading conditions.

12. A method as claimed in any of claims 7 to 9, in which the alteration command changes the value of the ticket.

13. A method as claimed in any preceding claim, in which the customers are targeted from a customer database held by the telecommunications provider.

14. A method as claimed in any of claims 1 to 12, in which the customers are targeted from a customer database held by the distributor.

15. A method as claimed in any of claims 1 to 12, in which the customers are targeted from a customer database held by the merchant carrying out the trade where the distributor and merchant are different entities.

16. A method as claimed in any preceding claim, in which the specified trading conditions are varied for different groups of customers within the group of targeted customers.

17. A method as claimed in any preceding claim, in which the specified trading conditions are chosen from some or all of the following criteria:-
value of relevant trade;
geographic location where trade takes place;
time and date of trade;
time elapsed since last, if any, trade;
date of issue of ticket; and
customer demographics.

18. A method as claimed in any preceding claim, in which:-
after a period of time from when the tickets were first allocated to each customer, the remaining unredeemed tickets are cancelled;
the targeted customers who redeemed the tickets are collected to form a separate customer group; and
the targeted customers who did not redeem the tickets are collected to form another customer group.

19. A method as claimed in any preceding claim, in which the ticket is in the form of an option on an invitation to an event and in which the unique ticket identifier includes a distributor phone number and the customer is required, before some specified time to:-
retrieve the distributor phone number;
open a communications link with the distributor;
download the unique ticket identifier; and
then, the invitation, having a new unique identifier number, is downloaded to the mobile phone.
